# EUROPEAN PATENT APPLICATION

(11) **EP 2 581 353 A1**
(43) Date of publication of application: **17.04.2013**
(21) Application number: 11792479.5
(22) Date of filing: 08.06.2011
(51) Int. Cl.: C03C 27/06, B32B 7/02, B32B 17/06, C03C 17/23

(54) **HEAT-RADIATION-BLOCKING MULTI-LAYERED GLASS**

(30) Priority: 10.06.2010 JP 2010132610
(71) Applicant: Bridgestone Corporation, Tokyo 104-8340 (JP)
(72) Inventor: SUZUKI Yuji, Yokohama-shi Kanagawa 244-8510 (JP); HATANAKA Akito, Yokohama-shi Kanagawa 244-8510 (JP)
(74) Representative: Lamb, Martin John Carstairs
(86) International application number: PCT/JP2011/063125
(87) International publication number: WO 2011/155522

(57) **Abstract**

A solar control double glass, which has enhanced weather resistance, is more lightweight, and can be produced at low cost, is provided. The solar control double glass 30 which comprises a solar control glass 20 having a glass plate I and a heat-ray shielding layer 14 provided thereon and another glass plate 37, the solar control glass 20 and the another glass plate 37 being arranged at an interval such that the heat-ray shielding layer 14 faces the another glass plate 37, and the interval forming a hollow layer 38, wherein the heat-ray shielding layer 14 comprises tungsten oxide and/or composite tungsten oxide.

## Description

### Technical Field

The present invention relates to a solar control double glass having heat-ray shielding property, particularly a solar control double glass having enhanced weather resistance.

### Background Art

In order to reduce the air-conditioning loads of buildings and vehicles such as bus, automobile and rail cars such as electric car, the windows mounted on these buildings or vehicles have heretofore required the functions of shielding near infrared ray (heat-ray) in solar light and of insulating heat by reflecting heat-ray emitted from inside of a room. As glasses shielding or reflecting heat-ray, a heat-ray adsorbing glass obtained by introducing ions such as Fe, Cr and Ti by kneading action to impart heat-ray adsorbing property to a glass, a heat-ray reflecting glass having metal oxide film formed by deposition, a heat-ray reflecting glass having transparent thin film of indium-tin oxide (ITO) or antimony-tin oxide (ATO) formed by dry-plating, and a heat-ray shielding glass having a heat-ray shielding film (also referred to as Low-E film) obtained by lamination of a metal oxide film/a noble metal film mainly consisting Ag film/a metal oxide film (Patent Document 1), have been developed, and put into practical use.

As these glasses shielding heat-ray (especially the glass having Low-E film (also referred to as Low-E glass)), a double glass having the structure that the glass shielding or reflecting heat-ray and another glass are arranged at a predetermined interval (through an air layer) such that these glasses face each other has been developed to improve thermal insulation property (Patent Document 2). The double glass can improve heat-insulating efficiency, and further reduce energy consumed by cooling and heating.

However, the Low-E film used in the heat-ray shielding glass of Patent Document 1 is formed by vacuum film forming method such as sputtering method, which requires a large-scaled equipment to bring about an increased production cost. Further, a metal layer such as the Low-E film is apt to be corroded and therefore a heat-ray shielding glass having the metal layer is reduced in good appearance by long-term use. Furthe, the Low-E glass has low resistance to penetrability and impact. The same applies to the double glass of Patent Document 2.

In contrast, a sun screening laminated structure (i.e., solar control glass) produced at low cost because of an easy film formation, enhanced in thermal insulation property and visible light transmittance, in which a laminated structure (i.e., laminated glass) is obtained by interposing an intermediate film comprising a particle of tungsten oxide and/or composite tungsten oxide (hereinafter also referred to as (composite) tungsten oxide) between two laminate plates, has been developed (Patent Document 3).

Further, it is known that a laminated glass using an intermediate film comprising (composite) tungsten oxide as described in Patent Document 3 is changed in color to blue by influence of solar light for long-term use. In order to solve this problem, for example, a laminated glass combining a benzophenone type ultraviolet absorber with the (composite) tungsten oxide to prevent the discoloration has been developed (Patent Document 4).

### Prior Art Documents

### Patent Document

Patent Document 1: JP (TOKKAI) 2001-226148 A
Patent Document 2: JP (TOKKAI) 2007-070146 A
Patent Document 3: WO 2005/087680 A1
Patent Document 4: JP (TOKKAI) 2010-017854 A

### Summary of the Invention

### Problem to be solved by the Invention

As mentioned above, a double glass as described in Patent Document 2 has enhanced thermal insulation efficiency and therefore the glass is effective to reduce the air-conditioning load. However, the double glass requires high production cost and is dissatisfactory in corrosion of metal film because of comprising Low-E glass. Therefore, a double glass comprising a solar control glass as described in Patent Document 3 or 4 is desired.

However, in the case of the double glass comprising the solar control glass described in Patent Document 3 or 4, one glass of the double glass should be a laminated glass obtained by interposing an intermediate film between two glass plates. Therefore, the weight of the double glass is increased and thereby the workability during transportation or installation of the glass is deteriorated. Further, though it is necessary to prevent the discoloration of the (composite) tungsten oxide, for example by using an ultraviolet absorber together described in Patent Document 4 as mentioned above, the use of ultraviolet absorber brings about increase of a production cost.

It is therefore an object of the present invention to provide a solar control double glass, which is improved in weather resistance and reduced in weight, and which can be produced at low cost.

### Means for Solving Problem

The above object can be attained by a solar control double glass which comprises a solar control glass having a glass plate and a heat-ray shielding layer provided thereon and another glass plate, the solar control glass and the another glass plate being arranged at an interval such that the heat-ray shielding layer faces the another glass plate, and the interval forming a hollow layer, wherein the heat-ray shielding layer comprises tungsten oxide and/or composite tungsten oxide.

In the solar control double glass of the invention, a heat-ray shielding layer of the solar control glass comprises (composite) tungsten oxide. This heat-ray shielding layer is free of the corrosion of metal film, and can be formed by coating method which can be conducted in low cost. Further, the weight of the double glass can be reduced because there is no necessity to seal the heat-ray shielding layer in a laminated glass. Additionally, the heat-ray shielding layer is arranged adjacent to a hollow layer in the double glass, which prevents the discoloration of the (composite) tungsten oxide caused by solar light without using a particular additive such as an ultraviolet absorber together.

Though the cause of the prevention of the discoloration of the (composite) tungsten oxide is not apparent, the following mechanism is considered:
It is considered that when a heat-ray shielding layer is irradiated by solar light, especially ultraviolet rays over a long duration, a polymer chain of a resin material of the layer degrades to generate a radical, which reduces (composite) tungsten oxide to produce pentavalent tungsten, where by the blue discoloration of the (composite) tungsten oxide occurs. Therefore, it is considered that tungsten reduction is hard to occur in the presence of oxygen such as in the hollow layer, thereby preventing the discoloration.

Further, in the case of a single glass type solar control glass, it is difficult to place a heat-ray shielding layer as an outermost layer to expose because of its low abrasion resistance. In contrast, in a solar control double glass, another glass plate physically protects the heat-ray shielding layer and therefore even the above-mentioned constitution has no trouble with the abrasion resistance.

Preferred embodiments of the solar control double glass according to the present invention are described as follows:

(1) The tungsten oxide is represented by general formula W_{y}O_{z} wherein W represents tungsten, O represents oxygen, and y and z satisfy the condition of 2.2≤z/y≤2.999, and the composite tungsten oxide is represented by a general formula MₓW_{y}O_{z} wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3.

Thereby, the solar control double glass having more improved near infrared absorption performance is obtained.

(2) The solar control glass has a structure that a glass plate, an adhesive layer, a transparent plastic film and heat-ray shielding layer are superposed in this order to be united.

Thereby the solar control double glass is improved in penetration resistance and impact resistance.

(3) The adhesive layer consists of an adhesive composition comprising ethylene-vinyl acetate copolymer (also referred to as EVA).

The EVA has high transparent and adhesion (bonding strength) and excellent weather resistance, and hence the solar control double glass is more improved in penetration resistance, impact resistance and weather resistance.

(4) The adhesive composition comprises further organic peroxide.

Thereby, the EVA can be crosslinked when the solar control glass is united. Therefore, the adhesive layer is more improved in adhesion and weather resistance and thereby the solar control double glass having more enhanced penetration resistance, impact resistance and weather resistance is obtained.

(5) The transparent plastic film comprises polyethylene terephthalate.

(6) The solar control glass is obtained by combining a transparent plastic film having a heat-ray shielding layer formed on one surface and an adhesive layer formed on the opposite surface with a glass plate through the adhesive layer. Thereby the solar control double glass is more easily produced.

(7) The combination of the solar control glass is carried out by heating under pressure a laminate at 60 to 150°C for 1 to 180min. Thus, the solar control glass is obtained with all layers being sufficiently united, and hence the solar control double glass is more enhanced in penetration resistance, shatter resistance and weather resistance.

(8) The hollow layer is formed by arranging the solar control glass and another glass plate through a spacer. Further it is preferred to place a desiccant agent within the spacer.

### Advantageous Effects of the Invention

In the solar control double glass of the present invention, the heat-ray shielding layer of the solar control glass comprises (composite) tungsten oxide. This heat-ray shielding layer is free of the corrosion of metal film, and can be formed by coating method which can be conducted in low cost. Further, the weight of the double glass can be reduced because there is no necessity to seal the heat-ray shielding layer in a laminated glass. Additionally, the heat-ray shielding layer is arranged adjacent to a hollow layer in the double glass, which prevents the discoloration of the (composite) tungsten oxide caused by solar light without using a particular additive such as an ultraviolet absorber together. Thus, the solar control double glass is improved in weather resistance, and reduced in weight, and which can be produced at low cost.

### Brief Description of the Drawings

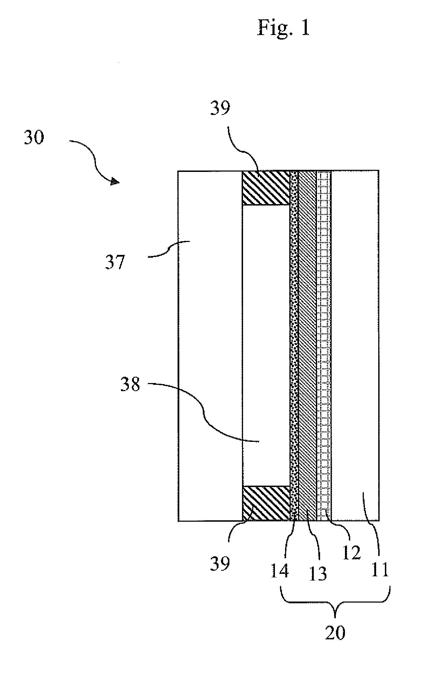

[Fig. 1] Fig. 1 is a schematic section view showing a typical example of a solar control double glass according to the present invention.

### Description of Embodiments

The embodiments of the present invention are explained in detail with reference of the drawing below. Fig. 1 is a schematic section view showing a typical example of a solar control double glass according to the present invention.

As shown in Fig. 1, the solar control double glass 30 of the invention is composed of a solar control glass 20, a glass plate 37 arranged with facing the solar control glass 20 at an interval, a spacer 39 through which they are bonded to each other by mean of adhesive (not shown in Fig. 1) provided on their outer peripheries, and a hollow layer 38 formed between the solar control glass 30 and the glass plate 37 by the spacer 39.

The solar control glass 20 has the structure that a glass plate 11, an adhesive layer 12 comprising chiefly EVA provided thereon, a transparent plastic film 13 and a heat-ray shielding layer 14 consisting of a resin composition which a fine particle of (composite) tungsten oxide is dispersed in a binder are superposed in this order to be united. For easily producing the solar control glass 20, it is preferably obtained by combining a transparent plastic film 13 having a heat-ray shielding layer 14 formed on one surface and an adhesive layer formed on the opposite surface with a glass plate through the adhesive layer.

Further, in the solar control double glass 30, the heat-ray shielding layer 14 of the solar control glass 20 faces the glass plate 37, in other words, the heat-ray shielding layer 14 is arranged adjacent to the hollow layer 38.

Since the heat-ray shielding layer 14 comprises a resin composition comprising (composite) tungsten oxide, it is possible to form the layer by coating method which can be conducted in low cost, and to prevent the corrosion of metal film. Further, the weight of the solar control glass 20 can be reduced because the glass does not have the structure comprising the heat-ray shielding layer sealed between two glass plates.

Additionally, since the heat-ray shielding layer 14 of the solar control double glass 20 is arranged adjacent to a hollow layer 38, the heat-ray shielding layer 14 is protected from damages such as abrasion and scratch by the glass plate 37, and also suppressed in the discoloration of the (composite) tungsten oxide caused by solar light.

Though the cause of the prevention of the discoloration of the (composite) tungsten oxide is not apparent, the following mechanism is considered:
It is considered that when a heat-ray shielding layer is irradiated by solar light, especially ultraviolet rays over a long duration, a polymer chain of a resin material of the layer degrades to generate a radical, which reduces (composite) tungsten oxide to produce pentavalent tungsten from hexavalent tungsten, where by the blue discoloration of the (composite) tungsten oxide occurs. Therefore, it is considered that tungsten reduction is hard to occur in the presence of oxygen such as in the hollow layer, thereby preventing the discoloration.

It is considered that oxygen has an effect on the prevention of the discoloration of (composite) tungsten oxide, and therefore the heat-ray shielding layer 14 is preferably formed on the topmost surface of the solar control glass 20, as shown in Fig. 1. Though it is not preferred to provide another layer on the heat-ray shielding layer 14, a thin layer that does not largely prevent the oxygen permeation may be provided on the heat-ray shielding layer 14.

In the invention, the adhesive layer 12 and the transparent plastic film 13 may be not provided. The heat-ray shielding layer may be formed directly on the surface of the glass plate 11, or the adhesive layer 12 and the heat-ray shielding layer 14 may be formed on the glass plate 11 in this order. The solar control glass 20 preferably has the structure that the glass plate 11, the adhesive layer 12, a transparent plastic film 13 and a heat-ray shielding layer 14 are superposed in this order to be united, as shown in Fig. 1 in order to have enhanced impact resistance, penetration resistance and improved smoothing property and further enable easily coating of the heat-ray shielding layer.

The elements of the solar control double glass 30 are explained below.

In the invention, the term "glass" means overall transparent substrates, and therefore, the "glass" includes glass plates and transparent plastic plates as well. Thus a solar control glass means a transparent substrate having heat-ray shielding property, and a solar control double glass means a double glass comprising at least one of the solar control glasses.

### [Heat-ray shielding layer]

The heat-ray shielding layer 14 of the invention consists of a resin composition comprising tungsten oxide and/or composite tungsten oxide, and a binder. A fine particle of (composite) tungsten oxide shows excellent weather resistance and excellent function cutting near infrared rays without shielding visual light, especially the near infrared rays being those having wavelength of approx. 850 to 1150nm which are emitted in large quantity from the sun, whereby excellent heat-ray shielding property.

When the (composite) tungsten oxide is used, a fine particle of the (composite) tungsten oxide is dispersed in a binder resin composition and the dispersed fine particle is used. Though the content of the fine particle of the (composite) tungsten oxide in the heat-ray shielding layer is not restricted, the content is generally in the range of 0.1 to 50g per 1m², preferably 0.1 to 20g per 1m², more preferably 0.1 to 10g per 1m². Containing the fine particle of the (composite) tungsten oxide in the amount as mentioned above brings about a solar control glass combining excellent heat-ray shielding property with high visible light transmission.

The tungsten oxide is generally represented by a general formula W_{y}O_{z} wherein W represents tungsten, O represents oxygen, and y and z satisfy the condition of 2.2≤z/y≤2.999. Further, the composite tungsten oxide has a composition obtained by adding to the tungsten oxide element M wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I. Hence, free electrons are generated in W_{y}O_{z} even in the case of z/y=3, and absorption properties derived from the free electrons develop in the region of near infrared rays, whereby the W_{y}O_{z} is useful as material absorbing near-infrared rays at approx. 1,000nm (also referred to as heat-ray shielding material). In the invention, preferred is composite tungsten oxide.

In the tungsten oxide fine particle of the general formula W_{y}O_{z} wherein W represents tungsten and O represents oxygen, the ratio of oxygen to tungsten is preferably less than 3, and further, y and z satisfy the condition of 2.2≤z/y≤2.999. When z/y is not less than 2.2, occurrence of unnecessary WO₂ crystalline phase in heat-ray shielding material can be prevented and the chemical stability of the material can be obtained, whereby the tungsten oxide can be used in effective near-infrared absorption material. In contrast, when z/y is not more than 2.999, free electrons can be generated in the required amount whereby the resultant heat-ray shielding material has high efficiency.

The composite tungsten oxide fine particle is preferably represented by a general formula MₓW_{y}O_{z} wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3, in view of stability. The alkaline metals are elements in 1st group of Periodical Table of the Elements except for hydrogen, the alkaline-earth metals are elements in 2nd group of Periodical Table of the Elements, and the rare-earth elements are Sc, Y and lanthanoid elements.

Particularly, from the viewpoint of enhancement of optical properties and weather resistance, M element is preferably one or more element selected from Cs, Rb, K, Tl, In, Ba, Li, Ca, Sr, Fe and Sn. Further the composite tungsten oxide is preferably treated with a silane coupling agent, whereby the resultant oxide shows excellent dispersing properties and hence brings about excellent near-infrared shielding properties and transparency.

When x/y which represents the addition amount of M is not less than 0.001, free electrons can be generated in a sufficient amount whereby the resultant heat-ray shielding material shows sufficient heat shielding effect. The amount of free electrons is increased with increase of the addition amount of the element M, which results in enhancement of heat shielding effect, but the amount of free electrons is saturated when x/y attains approx. 1. In contrast, when x/y is not more than 1, occurrence of an impurities phase in the heat-ray shielding layer can be preferably prevented.

Also in the composite tungsten oxide represented by a general formula MₓW_{y}O_{z}, a value of z/y which represents control of oxygen amount functions in the same manner as in the heat-ray shielding material represented by W_{y}O_{z.} In addition, the free electrons are provided depending on the addition amount of the element M even in case of z/y=3.0, and therefore z/y is preferably 2.2≤z/y≤3.0, more preferably 2.45≤z/y≤3.0.

In case the composite tungsten oxide particle has crystal structure of hexagonal crystal, the oxide is enhanced in transmission in visual light region and in absorption in near-infrared region.

In case a cation of element M exists in voids of hexagonal shape of the hexagonal crystal by the addition of the element M, the transmission in visual light region and the absorption in near-infrared region are enhanced. In general, the addition of element M having large ion radius brings about the formation of the hexagonal crystal, specifically the addition of Cs, K, Rb, Tl, In, Ba, Sn, Li, Ca, Sr, Fe facilitates the formation of the hexagonal crystal. Naturally, it is effective that even an addition element other than the above-mentioned elements exists in voids of the hexagonal shape formed from WO₆ units, and hence the addition element is not restricted to the above-mentioned elements.

In case the fine particle of the composite tungsten oxide having hexagonal crystal has uniform crystal structure, the addition amount of the addition element M is preferably set as a value of x/y to 0.2 to 0.5, more preferably 0.33. It is considered that x/y of 0.33 results in the addition element M being placed in all voids of the hexagonal shape.

Tungsten bronze having tetragonal or cubical crystal besides hexagonal crystal also has heat-ray shielding effect. The absorption position in near-infrared region is apt to vary depending upon the crystal structures, and the absorption position tends to move in the longer wavelength direction in the order of tetragonal<cubical<hexagonal crystal. With this tendency, the absorption in visual light region is apt to become small in the order of hexagonal<cubical<tetragonal crystal. Therefore, in use (application) that is required to transmit highly visual light and to shield highly near-infrared ray, it is preferred to use tungsten bronze having hexagonal crystal. In addition, the surface of the (composite) tungsten oxide of the invention is preferably coated with oxide containing one or more kind of Si, Ti, Zr and Al for the purpose of enhancement of weather resistance.

The average particle size of the fine particle of the composite tungsten oxide is preferably in the range of 10 to 800nm, especially 10 to 400nm in order to retain the transparency. This is because particles having the average particle size of not more than 800nm do not completely screen light due to scattering and therefore make it possible to retain visibility in the visible light region and simultaneously effectively ensure transparency. In case of particularly emphasizing transparency the visible light region, it is preferred to consider the scattering of the particles. In case of considering the reduction of the scattering, the average particle size is preferably in the range of 20 to 200nm, more preferably 20 to 100nm.

The determination of the average particle size of the particle is carried out by observing a section view of the heat-ray shielding layer at approx. 1,000,000-fold magnification by a transmission electron microscope and measuring diameters of circles corresponding to projected areas of at least 100 particles to determine their average value.

The fine particle of the (composite) tungsten oxide of the invention is, for example, prepared as follows:

The fine particle of the tungsten oxide represented by a general formula W_{y}O_{z} and/or the fine particle of the composite tungsten oxide represented by a general formula MₓW_{y}O_{z} can be obtained by subjecting a starting material of a tungsten compound to heat treatment under an inert gas or reducing gas atmosphere.

Examples of the starting material of tungsten compound preferably include tungsten trioxide powder, tungsten oxide hydrate, tungsten hexachloride powder, ammonium tungstate powder, tungsten oxide hydrate powder obtained by dissolving tungsten hexachloride in alcohol and drying it, tungsten oxide hydrate powder obtained by dissolving tungsten hexachloride in alcohol, forming precipitation by addition of water and drying the precipitation, tungsten compound powder obtained by drying an ammonium tungstate aqueous solution, and metal tungsten powder, and one or more of the examples can be also used.

In order to facilitate the preparation of the fine particle of the tungsten oxide, it is more preferred to use tungsten oxide hydrate powder or tungsten compound powder obtained by drying an ammonium tungstate aqueous solution. The preparation of the fine particle of the composite tungsten oxide is more preferably carried out by using an ammonium tungstate aqueous solution or a tungsten hexachloride solution because the solution of starting material easily enables homogeneous mixing of elements to be used. Thus, the fine particle of the tungsten oxide and/or the composite tungsten oxide having the particle size as mentioned above can be obtained by subjecting the above-mentioned material(s) to heat treatment under an inert gas or reducing gas atmosphere.

The fine particle of the composite tungsten oxide represented by a general formula MₓW_{y}O_{z} can be prepared by using a starting material of tungsten compound containing an element of M or a M-containing compound though in the same manner as the starting material of tungsten oxide of a general formula W_{y}O_{z}. In order to prepare a starting material in which used components are homogeneously mixed in molecular level, solutions of components are preferably mixed with each other. Hence it is preferred that a tungsten compound containing element M is dissolvable in a solvent such as water, or organic solvent. For example, tungstate, chloride, nitrate, sulfate, oxalate or oxide containing element M is mentioned. However, these are not restricted, and any in the form of solution can be preferably used.

The heat treatment under an inert gas atmosphere is preferably carried out in the condition of 650°C or higher. The starting material heat-treated at 650°C or higher has sufficient coloring power and hence brings about heat-ray-shielding fine particle having excellent efficiency. Examples of the inert gas include preferably Ar, N₂. Further, the heat treatment under a reducing gas atmosphere is preferably carried out by firstly heating a starting material at temperature of 100 to 650°C under a reducing gas atmosphere and subsequently heating at temperature of 650 to 1200°C under an inert gas atmosphere. Example of the reducing gas preferably includes H₂, but is not restricted to. In case H₂ is used as the reducing gas, a composition of the reducing gas has preferably not less than 0.1 % by volume of H₂, more preferably not less than 2% by volume of H₂. Use of not less than 0.1 % by volume of H₂ enables the reduction to effectively promote.

The material powder reduced with hydrogen contains magnelli phase and shows excellent heat-ray shielding properties, and hence the material powder can be used as the heat-ray shielding fine particle without modification. However, since hydrogen contained in tungsten oxide is unstable, its application may be restricted in view of weather resistance. By subjecting the tungsten oxide containing hydrogen to heat treatment at temperature of 650°C or higher under an inert gas atmosphere, further stable heat-ray shielding fine particle can be obtained. Though the atmosphere in the heat treatment is not restricted, the atmosphere preferably includes N₂ or Ar in view of industrial aspect. The heat treatment at temperature of 650°C or higher brings about formation of magnelli phase in the heat-ray shielding fine particle whereby weather resistance is enhanced.

The composite tungsten oxide particle of the invention has been preferably subjected to surface treatment by a coupling agent such as a silane coupling agent, a titanate coupling agent or an aluminum coupling agent. The silane coupling agent is preferred. Thereby the composite tungsten oxide becomes to have excellent compatibility with binder resin, which results in improvement of various properties such as transparency, heat-ray shielding properties.

Examples of the silane coupling agents include γ-chloropropyltrimethoxysilane, vinyltriethoxysilane, vinyl-tris(β-methoxyethoxy)silane, γ-methacryloxypropyltrimethoxysilane, vinyltriacetoxysilane, γ-glycidoxypropyltrimethoxysilane, γ-glycidoxypropyltriethoxysilane, β-(3,4-epoxycyclohexyl)ethyltrimethoxysilane, vinyltrichlorosilane, γ-mercaptopropylmethoxysilane, γ-aminopropyltriethoxysilane, N-[β-(alninoethyl)-γ-aminopropyltrimethoxysilane. Preferred are vinyltris(β-methoxyethoxy)silane, γ-methacryloxypropyltrimethoxysilane, vinyltriacetoxysilane. The silane coupling agents can be used singly, or in combination of two or more kinds. The content of the silane coupling agent is preferably in an amount of 5 to 20 parts by weight based on 100 parts by weight of the fine particle.

As the binder of the resin composition, known thermoplastic resin, ultraviolet curable resin and thermosetting resin can be used. Examples of the binder include transparent synthetic resins such as silicone resin, fluororesin, olefin resin, acrylic resin, polyester resin, epoxy resin, urethane resin, phenol resin, resorcinol resin, urea resin, melamine resin, furan resin. Preferred are silicone resin, fluororesin, olefin resin and acrylic resin in view of weather resistance. Thermoplastic resin and ultraviolet curable resin, especially ultraviolet curable resin is preferred. Ultraviolet curable resin can be cured in a short time, therefore brings about excellent productivity. The resin composition contains a thermal polymerization initiator or photopolymerization initiator depending upon curing methods. The resin composition further contains a curing agent such as a polyisocyanate compound.

Further, for example, in case the transparent plastic film 13 is not employed, EVA used in an adhesive composition of an adhesive layer 12 mentioned later can be used as a binder of the heat-ray shielding layer.

The content of the (composite) tungsten oxide in the resin composition of the heat-ray shielding layer 14 is preferably in an amount of 10 to 500 parts by weight, further preferably 20 to 500 parts by weight, especially 30 to 300 parts by weight based on 100 parts by weight of the binder.

Further, the heat-ray shielding layer in the invention can secondarily comprise other heat-ray shielding material (generally, it is inorganic materials or organic dyes having absorption maximum in wavelength of 800 to 1200nm) singly or in combination. The examples of the other heat-ray shielding material include indium-tin oxide, tin oxide, antimony tin oxide, phthalocyanine dyes, metal complexes dyes, nickel dithioren complexes dyes, cyanine dyes, squalirium dyes, polymethine dyes, azomethine dyes, azo dyes, polyazo dyes, diimmonium dyes, aminium dyes, anthraquinone dyes. In case a dye such as phthalocyanine dyes is used combined with the (composite) tungsten oxide, the content of the dye is preferably in an amount of 0.01 to 20 parts by weight, further preferably 0.1 to 10 parts by weight, especially 0.5 to 5 parts by weight based on 100 parts by weight of the binder.

The heat-ray shielding layer may further contain a dye for coloring, ultraviolet absorber, antioxidant.

The preparation of the heat-ray shielding layer is preferably carried out by applying a resin composition including (composite) tungsten oxide and a binder, etc., onto a surface of a transparent plastic film 12 and drying the applied film, and, if necessary, then curing it by heating or light irradiation using ultraviolet rays, X-ray, γ-ray or electron beam. The drying is preferably carried out by heating the resin composition applied onto the transparent plastic film to 60 to 150°C, especially 70 to 110°C. The drying time generally is in the range of 1 to 10 minutes. The light irradiation is carried out by using ultraviolet rays emitted from a lamp such as super high-pressure, high-pressure and low-pressure mercury lamps, carbon-arc, xenon-arc, or a metal halide lamp.

### [Adhesive layer]

The adhesive layer 12 of the invention consists of an adhesive composition comprising an adhesive resin. The adhesive resin is not restricted. Examples of the adhesive resin include ethylene copolymers such as ethylene-vinyl acetate copolymer (EVA), ethylene-(meth)acrylic acid copolymer, ethylene-ethyl (meth)acrylate copolymer, ethylene-methyl (meth)acrylate copolymer, metal-ion crosslinked ethylene-(meth)acrylic acid copolymer, partially saponified ethylene-vinyl acetate copolymer, carboxylated ethylene-vinyl acetate copolymer, ethylene-(meth)acrylic acid-maleic anhydride copolymer and ethylene-vinyl acetate-(meth)acrylate copolymer. The (meth)acrylic acid means acrylic acid and methacrylic acid and the (meth)acrylate means acrylate and methacrylate. Besides these polymers, there can be mentioned acrylic resin, polyvinyl butyral (PVB) resin, epoxy resin, phenol resin, silicon resin, polyester resin, urethane resin, rubber adhesives, thermoplastic elastomer (TPE) such as SEBS (styrene/ethylene/butylene/styrene) and SBS (styrene/ butadiene/styrene). The adhesive resins can be used singly, or in combination thereof. The EVA is preferred because it shows excellent adhesion, penetration resistance, impact resistance, durability and weather resistance for long term and transparency.

The content of vinyl acetate recurring unit of EVA used in the adhesive composition preferably is in the range of 22 to 38% by weight, more preferably is in the range of 22 to 29% by weight, especially 24 to 26% by weight based on EVA. The range of content of vinyl acetate recurring unit of EVA brings about the adhesive layer showing excellent adhesion and transparency and enables easy superposition with a glass plate. EVA preferably has Melt Flow Index (MFR) of 4.0 to 30.0g/10min., especially 8.0 to 18.0g/10min., which renders preliminary pressure bonding easy.

The adhesive composition preferably contains further an organic peroxide. When the glass plate, the adhesive layer, the transparent plastic film and the heat-ray shielding layer are superposed to be united, the EVA is crosslinked or cured by the organic peroxide to sufficiently combine and unite them, whereby penetration resistance and impact resistance are more improved.

Any organic peroxides that can be decomposed at a temperature of not less than 100°C to generate radical(s) can be employed as the organic peroxide of the invention. The organic peroxide is selected in the consideration of film-forming temperature, condition for preparing the composition, curing (bonding) temperature, heat resistance of body to be bonded, storage stability. Especially, preferred are those having a decomposition temperature of not less than 70°C in a half-life of 10 hours.

Preferred examples of the organic peroxides include 2,5-dimethylhexane-2,5-dihydroperoxide, 2,5-dimethyl-2,5-(t-butylperoxy)hexane, di-t-butylperoxide, t-butylcumyl peroxide, 2,5-dimethyl-2,5-di(t-butylperoxy)hexane, dicumyl peroxide, a,a'-bis(t-butylperoxyisopropyl)benzene, n-butyl-4,4-bis(t-butylperoxy)valerate, 1,1-bis(t-butylperoxy)cyclohexane, 1,1-bis(t-butylperoxy)-3,3,5-trimethylcyclohexane, t-butylperoxybenzoate, benzoyl peroxide, t-butylperoxyacetate, methyl ethyl ketone peroxide, 2,5-dimethylhexyl-2,5-bisperoxybenzoate, butyl hydroperoxide, p-menthane hydroperoxide, p-chlorobenzoyl peroxide, hydroxyheptyl peroxide, chlorohexanone peroxide, octanoyl peroxide, decanoyl peroxide, lauroyl peroxide, cumyl peroxyoctoate, succinic acid peroxide, acetyl peroxide, m-toluoyl peroxide, t-butylperoxyisobutylate and 2,4-dichlorobenzoyl peroxide.

The content of the organic peroxide in the adhesive composition is preferably in an amount of 1 to 10 parts by weight, especially 1 to 5 parts by weight based on 100 parts by weight of EVA.

The adhesive composition preferably contains further a crosslinking auxiliary and a silane coupling agent for enhancing the adhesive strength.

Examples of crosslinking auxiliaries include esters of plural acrylic acids or methacrylic acids with polyhydric alcohol such as glycerol, trimethylol propane or pentaerythritol; and polyfunctional compound such as triallyl cyanurate and triallyl isocyanurate.

Examples of the silane coupling agents include γ-chloropropyltrimethoxysilane, vinyltriethoxysilane, vinyl-tris(β-methoxyethoxy)silane, γ-methacryloxypropyltrimethoxysilaine, vinyltriacetoxysilane, γ-glycidoxypropyltrimethoxysilane, γ-glycidoxypropyltriethoxysilane, β-(3,4-epoxycyclohexyl)ethyltrimethoxysilane, vinyltrichlorosilane, γ-mercaptopropyltrimethoxysilane, γ-aminopropyltriethoxysilane, N-β-(aminoethyl)-γ-aminopropyltrimethoxysilane. The silane coupling agents can be used singly, or in combination of two or more kinds. The content of the silane coupling agent is preferably in an amount of not more than 5 parts by weight based on 100 parts by weight of EVA.

The adhesive composition may include acryloxy group-containing compounds, methacryloxy group-containing compounds, epoxy group-containing compounds, plasticizers, ultraviolet absorbers for improvement or adjustment of various properties of the layer (e.g., mechanical strength, adhesive property (adhesion), optical characteristics such as transparency, heat resistance, light-resistance, cross-linking rate), particularly for improvement mechanical strength and light-resistance. Examples of the ultraviolet absorbers include benzophenone compounds, triazine compounds, benzoate compounds, and hindered amine compounds. The benzophenone compounds are preferred from the viewpoint of suppression of yellowing. The content of the ultraviolet absorbers is preferably in an amount of 0.01 to 1.5 parts by weight, especially 0.5 to 1.0 parts by weight based on 100 parts by weight of EVA.

The adhesive layer can be prepared, for example, by molding an adhesive composition comprising EVA and an organic oxide, etc., by a conventional molding process such as extrusion molding or calendaring molding (calendaring) to form a product in the form of layer. The mixing of the composition is preferably carried out by kneading the composition under heating at 40 to 90°C, especially 60 to 80°C. Further, the formation of a film (layer) is preferably carried out at such temperature that the organic peroxide does not have reaction or scarcely has reaction. For example, the temperature is preferably set to the range of 40 to 90°C, especially 50 to 80°C. The adhesive layer 12 may be formed directly on a surface of a plastic film 13. Otherwise a sheet of the adhesive layer (i.e., in the form of film) may be prepared, and then superposed on a plastic film 13 or a glass plate 11.

The thickness of the adhesive layer preferably is in the range of 100 to 2,000µm, especially 400 to 1,000µm.

### [Transparent plastic film]

The transparent plastic film 12 of the invention is not restricted. The materials of the transparent plastic film include any plastics having transparency (the transparency meaning transparency to visible light). Examples of the plastic films include polyethylene terephthalate (PET) film, polyethylene naphthalate (PEN) film, polymethyl methacrylate (PMMA) film, polycarbonate (PC) film, polyethylene butyrate film. Preferred is polyethylene terephthalate (PET), because it has high resistance to processing load such as heat, solvent and bending, and especially high transparency. Further the surface of the transparent plastic film may be subjected to adhesion treatment such as corona treatment, plasma treatment, flame treatment, primer layer coating treatment, in order to improve the adhesion of the surface. Otherwise, an adhesion layer of thermosetting resin such as copolymerized polyester resin or polyurethane resin may be provided. The thickness of the transparent plastic film generally is in the range of 1µm to 10mm, preferably 10 to 400µm, especially 20 to 200µm.

### [Glass plate]

The glass plate 11 of the invention may be any transparent substrates. For example, glass plates such as a green glass plate, a silicate glass plate, an inorganic glass plate and a colorless transparent glass plate, and a substrate, plate or film made of plastic as well can be used. Examples of the plastic include polyethylene terephthalate (PET), polyethylene naphthalate (PEN), polyethylene butyrate and polymethyl methacrylate (PMMA). A glass plate is preferred in view of weather resistance and impact resistance. The thickness of the glass plate generally is in the range of 1 to 20mm.

### [Solar control glass]

The solar control glass 20 of the invention is prepared as follows. For example, first, a laminate that the transparent plastic film 13 has the heat-ray shielding layer 14 formed on one surface and the adhesive layer 12 formed on the opposite surface, and the glass plate 11 are provided. The laminate is superposed on the glass plate 11 such that the adhesive layer 12 faces the glass plate 11. The resultant laminate is degassed, and then pressed (preferably 1.0×10³Pa to 5.0×10⁷ Pa) under heating (preferably 40 to 200°C for 1 to 180 minutes, more preferably 60 to 150°C for 1 to 180 minutes) to adhesively be combined with each other. These steps can be carried out, for example, by using vacuum package system or nip rollers system. The adhesive layer 12 may be separately provided on the glass plate 11 without being formed on the surface of the transparent plastic film 13.

In case EVA is used as the adhesive composition, EVA is generally crosslinked at 100 to 150°C (especially approx. 130°C) for 10 minutes to 1 hour. This crosslinking is carried out by degassing the laminate, preliminarily bonding it under pressure, for example, at a temperature of 80 to 120°C) and heating it at 100 to 150°C (especially approx. 130°C) for 10 minutes to 1 hour. Cooling after the crosslinking is generally carried out at room temperature. The cooling is preferably fast.

Additionally, the heat-ray shielding layer 14 can be directly formed on a surface of the glass plate 11 without using the transparent plastic film 13, and further, in order to improve the adhesion between the heat-ray shielding layer 14 and the glass plate 11, the adhesive layer 12 can be provided on the glass plate 11 and the heat-ray shielding layer 14 provided thereon.

Furthe, the solar control glass may comprise other layers in addition to the heat-ray shielding layer 14 and adhesive layer 12, unless they cause adverse effects on the invention. Examples of other layers include a hard coat layer, and an ultraviolet absorbing layer which comprises resin materials (binder) and ultraviolet absorbers, etc., as described in explanation of the heat-ray shielding layer or the adhesive layer.

### [Solar control double glass]

Examples of the hollow layer 38 of the solar control double glass of the invention include an air layer, an inert gas layer and a decompression layer. The use of the hollow layer enhances thermal insulation property and simultaneously suppresses degradation over time of the heat-ray shielding layer. The air layer may use dried air obtained by using a spacer containing a desiccant agent. The inert gas layer generally contains inert gas such as krypton gas, argon gas or xenon gas. However, it is preferred that the hollow layer contains oxygen in order to prevent the discoloration of the (composite) tungsten oxide. The thickness of the hollow layer is preferably in the range of 6 to 12mm.

Various glasses such as a float glass, a figured glass, a glass having light diffusion function by surface treatment, a wired glass, a lined sheet glass, a reinforced glass, a double reinforced glass, a low reflectance glass, a high transparent sheet glass, a ceramic printed glass, and a special glass having heat ray or ultraviolet ray absorbing function can be appropriately selected for use in the glass plate 37. Further, a soda silicate glass, a soda lime glass, a borosilicate glass, an aluminosilicate glass and various crystallized glasses can be used in view of the composition of the glass plate.

The shape of the solar control double glass of the invention includes various shapes such as rectangle, circle and rhombus, and the shape is selected depending upon use applications. The solar control double glass can be used in wide applications such as a widow glass for building and vehicle (automobile, rail car, marine vessel), an electronic device such as a plasma display, and a door or wall portion of various devices such as refrigerator and thermal insulation system.

In case the solar control double glass of the invention is used for a widow glass for building and vehicle in temperate regions such as relatively low-latitude region, the solar control double glass is preferably arranged such that the glass plate 37 is placed on the indoor side while the solar control glass 20 placed on the outdoor side. Thereby sun light and near infrared rays emitted from the outdoor can be effectively shielded. On the other hand, in case the solar control double glass of the invention is used in cold regions such as relatively high-latitude region, the solar control double glass is preferably arranged such that the glass plate 37 is placed on the outdoor side while the solar control glass 20 placed on the indoor side. Thereby, infrared rays emitted from a heater in the indoor are retained by reflection (thermal insulating properties) to enhance the heating efficiency.

### Example

Examples are set forth below to explain the present invention in detail.

### [Example 1]

### (1) Preparation of heat-ray shielding layer

A composition having the following formulation was applied onto a transparent plastic film (PET film (thickness: 188µm)) with a bar coater, dried in an oven at 80°C for 2 minutes, and subsequently exposed to ultraviolet rays (irradiation dose of 500mJ/m², irradiation time of 1sec.). Thereby a heat-ray shielding layer (thickness: 5µm) was formed on the PET film.

(Formulation of heat-ray shielding layer (part(s): part(s) by weight))
Dipentaerythritol hexaacrylate; 80 parts
Photopolymerization initiator (Irgacure® 184); 5 parts
Cs_{0.33}WO₃ (mean particle size: 80nm); 20 parts
Methyl isobutyl ketone; 300 parts

### (2) Preparation of adhesive layer

A composition having the following formulation was rolled by calendaring to prepare an adhesive layer (thickness: 0.4mm) in the form of sheet. The kneading of the composition was carried out at 80°C for 15 minutes, and the temperature of the calendar roll was 80°C and its processing rate was 5m/min.

### (Formulation of adhesive layer (parts: parts by weight))

EVA (content of vinyl acetate based on EVA is 25wt. %); 100 parts
Organic peroxide (t-butylperoxy-2-ethylhexyl monocarbonate); 2.5 parts
Crosslinking auxiliary (triallyl isocyanurate); 2 parts
Silane coupling agent (γ-methacryloxypropyltrimethoxysilane); 0.5 parts
Ultraviolet absorber (Uvinul 3049 available from BASF); 0.5 parts

### (3) Preparation of solar control glass

A laminate was prepared by superposing the adhesive layer on the surface opposite to the heat-ray shielding layer of the PET film, and pressing to adhere. Then the laminate was superposed on the glass plate such that the adhesive layer faces a glass plate (thickness: 3mm). The resultant laminate was temporarily bonded under pressure by heating at 100°C for 30 minutes, and then heated in an autoclave under pressure of 13 × 10⁵Pa at 140°C for 30 minutes. Thereby, the adhesive layer was cured and the glass plate, the adhesive layer, the transparent plastic film (PET film) and the heat-ray shielding layer were combined to be united to prepare a solar control glass.

### (4) Preparation of solar control double glass

A glass plate (thickness: 3mm) and the solar control glass were superposed with each other through a spacer made of aluminum in the form of frame which was placed on their peripheral area such that the heat-ray shielding layer of the solar control glass is present on the side of an air layer formed by the spacer, and they were bonded with butyl rubber. The air layer had a thickness of 6mm.

### [Comparison Example 1]

### (1) Preparation of solar control glass

A heat-ray shielding layer was formed on a PET film, and an adhesive layer was prepared in the same manner as Example 1. Then, a glass plate (thickness: 3mm), the adhesive layer, the heat-ray shielding layer formed on the PET film, the adhesive layer and a glass plate (thickness: 3mm) were laminated in this order. The resultant laminate was temporarily bonded under pressure by heating at 100°C for 30 minutes, and then heated in an autoclave under pressure of 13x10⁵Pa at 140°C for 30 minutes. Thereby, the adhesive layer was cured to prepare a solar control glass.

### (2) Preparation of solar control double glass

The procedures of Example 1 were repeated except for using the solar control glass prepared as mentioned above.

### [Comparison Example 2]

The solar control glass prepared in Example 1 was used as Comparison Example 2.

### [Evaluation method]

### (1) Weather resistance (light resistance)

Each of the resultant solar control double glasses and solar control glass was irradiated by xenon-arc for 2000 hours using Xenon Weather Meter XL75 (manufactured by Suga Test Instruments Co.,Ltd.).
The total light transmittances of thickness direction of the each glass sample before and after the irradiation were determined by Haze computer HGM-2DP (manufactured by Suga Test Instruments Co.,Ltd.) , and then transmittance changes (%) were calculated.

### (2) Thermal insulation property

The heat transmission coefficient (U value) was determined according to JIS R 3107.

### [Evaluation result]

Evaluation result of the glass samples is shown in Table 1.

**Table 1**

| | Example 1 | Comparison Example 1 | Comparison Example 2 |
|---|---|---|---|
| Type | Double glass | Double glass | Single glass |
| Laminated structure of Solar control glass | Glass plate / Adhesive layer / PET film / Heat-ray shielding layer | Glass plate / Adhesive layer / PET film / Heat-ray shielding layer / Adhesive layer / Glass plate | Glass plate / Adhesive layer / PET film / Heat-ray shielding layer |
| Weather resistance (transmittance change (%) by xenon-arc irradiation) | 2 | 20 | 2 |
| Heat transmission coefficient (U value) (W/(m²/k)) | 3.4 | 3.4 | 5.8 |

As apparent from Table 1, the double glass of Example 1 and Comparison Example 1 show lowered heat transmission coefficient which means high thermal insulation property compared with one of Comparison Example 2 having one glass plate. Further, Example 1 and Comparison Example 2 which the heat-ray shielding layer is provided adjacent to an air layer show less transmittance change after xenon-arc irradiation. On the other hand, Comparison Example 1 which the solar control glass has a laminated glass structure that the heat-ray shielding layer is interposed between two glass plates shows significant transmittance change, which means that (composite) tungsten oxide is discolored.

As described above, it is shown that a solar control double glass which has enhanced weather resistance and improved thermal insulation with a simple constitution can be obtained by the solar control double glass of the invention.

Meanwhile, the present invention is not restricted to the embodiments and Examples described previously, and therefore can be varied in wide range as long as satisfies the scope of the gist of the invention.

### Industrial Applicability

It is possible to provide a solar control double glass that can retain a reduced air-conditioning loads of buildings, vehicles such as bus and automobile, and rail cars such as electric car for long time period.

### Description of the reference numbers

- 11, 37:: Glass plate
- 12:: Adhesive layer
- 13:: Transparent plastic film
- 14:: Heat-ray shielding layer
- 20:: Solar control glass
- 38:: Hollow layer
- 39:: Spacer
- 30:: Solar control double glass

## Claims

1. A solar control double glass which comprises a solar control glass having a glass plate and a heat-ray shielding layer provided thereon and another glass plate, the solar control glass and the another glass plate being arranged at an interval such that the heat-ray shielding layer faces the another glass plate, and the interval forming a hollow layer,
wherein the heat-ray shielding layer comprises tungsten oxide and/or composite tungsten oxide.

2. A solar control double glass as defined in claim 1, wherein the tungsten oxide is represented by general formula W_{y}O_{z} wherein W represents tungsten, O represents oxygen, and y and z satisfy the condition of 2.2≤z/y≤2.999, and the composite tungsten oxide is represented by a general formula MₓW_{y}O_{z} wherein M represents at least one element selected from H, He, alkaline metals, alkaline-earth metals, rare-earth elements, Mg, Zr, Cr, Mn, Fe, Ru, Co, Rh, Ir, Ni, Pd, Pt, Cu, Ag, Au, Zn, Cd, Al, Ga, In, Tl, Si, Ge, Sn, Pb, Sb, B, F, P, S, Se, Br, Te, Ti, Nb, V, Mo, Ta, Re, Be, Hf, Os, Bi and I, W represents tungsten, O represents oxygen, and x, y and z satisfy the conditions of 0.001≤x/y≤1 and 2.2≤z/y≤3.

3. A solar control double glass as defined in claim 1 or 2, wherein the solar control glass has a structure that the glass plate, an adhesive layer, a transparent plastic film and the heat-ray shielding layer are superposed in this order to be united.

4. The solar control double glass as defined in claim 3, wherein the adhesive layer consists of an adhesive composition comprising ethylene-vinyl acetate copolymer.

5. The solar control double glass as defined in claim 4, wherein the adhesive composition comprises further organic peroxide.

6. The solar control double glass as defined in any of claims 3 to 5, wherein the transparent plastic film comprises polyethylene terephthalate.
